(19) Europäisches Patentamt
European Patent Office
Office européen des brevets

(11) EP 2 604 332 B1

(12) **EUROPEAN PATENT SPECIFICATION**

(45) Date of publication and mention of the grant of the patent:
**08.07.2015 Bulletin 2015/28**

(21) Application number: **11306648.4**

(22) Date of filing: **13.12.2011**

(51) Int Cl.:
*B01D 71/34* (2006.01) *B01D 71/78* (2006.01)
*B01D 71/80* (2006.01) *B01D 67/00* (2006.01)
*B05D 5/00* (2006.01) *G01N 27/333* (2006.01)
*H01M 4/00* (2006.01) *B82Y 40/00* (2011.01)

(54) **Method for preparing a functionalized nanoporous track-etched PVDF membrane with RAFT polymerization**

Verfahren zur Herstellung einer funktionalisierten nanoporösen Kernspur-PVDF-Membran mit RAFT-Polymerisierung

Procédé pour préparer une membrane PVDF à traces attaquées nanoporeuse fonctionnalisée au moyen d'une polymérisation RAFT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.06.2013 Bulletin 2013/25**

(73) Proprietors:
- **Ecole Polytechnique**
  **91120 Palaiseau (FR)**
- **Commissariat à l'Énergie Atomique et aux Énergies Alternatives**
  **75015 Paris (FR)**
- **Centre National de la Recherche Scientifique**
  **75016 Paris (FR)**
- **Hacettepe University**
  **06800 Ankara (TR)**

(72) Inventors:
- **Bessbousse, Haad**
  **91120Palaiseau (FR)**
- **Barsbay, Murat**
  **06010 ANKARA (TR)**
- **Guven, Olgun**
  **06534 ANKARA (TR)**
- **Clochard, Marie-Claude Laurence**
  **78500 SARTROUVILLE (FR)**
- **Wade, Travis Lee**
  **75015 PARIS (FR)**

(74) Representative: **Noel, Chantal Odile**
**Cabinet Orès**
**36, rue de St Pétersbourg**
**75008 Paris (FR)**

(56) References cited:
**EP-A1- 2 131 189**

- **ALEM ET AL: "Microstructure and thermo-responsive behavior of poly(N-isopropylacrylamide) brushes grafted in nanopores of track-etched membranes", JOURNAL OF MEMBRANE SCIENCE, ELSEVIER SCIENTIFIC PUBL.COMPANY. AMSTERDAM, NL, vol. 308, no. 1-2, 19 December 2007 (2007-12-19), pages 75-86, XP022393738, ISSN: 0376-7388**
- **ALEXANDER FRIEBE ET AL: "Controlled Pore Functionalization of Poly(ethylene terephthalate) Track-Etched Membranes via Surface-Initiated Atom Transfer Radical Polymerization", LANGMUIR, vol. 23, no. 20, 1 September 2007 (2007-09-01), pages 10316-10322, XP55024273, ISSN: 0743-7463, DOI: 10.1021/la7016962**
- **HAAD BESSBOUSSE ET AL: "Functionalized nanoporous track-etched [beta]-PVDF membrane electrodes for lead(ii) determination by square wave anodic stripping voltammetry", ANALYTICAL METHODS, vol. 3, no. 6, 1 January 2011 (2011-01-01) , page 1351, XP55024412, ISSN: 1759-9660, DOI: 10.1039/c1ay05038a**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 604 332 B1

## Description

The invention relates to a method for preparing a functionalized nanoporous track-etched PVDF membrane.

Nanoscale science is extremely broad and growing in scope and impact due to its potential applications in various fields such as medicine, environment and energy. Compared to the widely studied inorganic and organic nanomaterials, studies investigating polymeric nanomaterials are minor as the preparation methods of such polymeric materials are limited to a few strategies such as heterogeneous polymerization, e.g. emulsion polymerization, dispersion polymerization, etc and self-assembly of the block copolymer in a selective solvent. Fabricating micro-/nano-structures on solid-state substrate by using heavy ion irradiation and track-etching technique opens a reliable and cost-effective route to micro- and nano-technology. Synthetic nanopores are widely used in many fields, such as ionic transport rectification in nanofluidic diodes, DNA detection, molecular separation, responsive gating, and energy conversion.

Poly(vinylidene fluoride) (PVDF) has found wide-spread industrial applications and research interest since the 1960s, because of its excellent mechanical and physicochemical properties. Among of the inherent characteristics, PVDF films with etched latent tracks induced by swift heavy ions promise new applications especially for separation and filtration purposes. It has been discovered that the radicals produced by the heavy ion irradiation in the damage tracks are very stable in β-PVDF due to the crystallinity of the polymer. The radical tracks are chemically etched to reveal nanoporous channels and the channel diameters are proportional to the etching time. After the etching, however, there are still radicals within the pores. These remaining radicals can be reacted with different vinyl monomers to impart chemical functionalization to the nanopore interior without blocking the pores. Poly(acrylic acid) (PAA) has been recently grafted from these nanopores and the PAA functionalized nanoporous β-PVDF membranes are then transformed into electrodes by the deposition of a thin gold layer onto the membrane surfaces to make an electrically conductive thin film. The metallic layer (gold or other) is thin enough (35 nm) that is does not completely cover the pores. When the track-etched functionalized nanoporous β-PVDF membrane electrodes, or functionalized membrane electrodes (FME), are immersed in a liquid sample they can selectively absorb certain ions, such as $Pb^{2+}$, depending on their functionalization. They can then be removed from the sample, rinsed, and placed in an electrochemical cell for analysis.

These FMEs were found to be sensitive to sub-ppb concentrations of $Pb^{2+}$. However, a dense hydrogel of PAA grafted to the nanoporous walls of PVDF is the main problem as its adsorption and electrodeposition efficiency is related to PAA chains arrangement.

The prior art comprises the document M. Grasselli et al. "Electron-beam induced RAFT-graft polymerization of poly(acrylic acid) onto PVDF"; Nucl. Instr. and Meth. in Phys. Res. B, 236 (2005) pp. 201-207, which describes the use of a RAFT mechanism for a surface graft polymerization of acrylic acid (AA) onto poly(vinylidene difluoride) (PVDF) in order to improve its surface properties.

The document Bessbousse, H; Nandhakumar, I; Decker, M.; Barsbay, M.; Cuscito, O.; Lairez, D.; Clochard, M.-C.; Wade, T. L.: "Functionalized nanoporous track-etched β-PVDF membrane electrodes for lead(II) determination by square wave anodic stripping voltammetry "; Analytical Methods; June 2011, 3, 135, describes track-etched, poly(acrylic acid) (PAA) functionalized nanoporous β-poly(vinylidene fluoride) (β-PVDF) membranes with thin porous. Au films are sputtered on each side of the membrane as electrodes.

Barsbay, M., Güven, O., Stenzel, M.H., Davis, T.P., Barner-Kowollik, C., Barner, L., 2007; "Verification of Controlled Grafting of Styrene from Cellulose via Radiation-Induced RAFT Polymerization"; Macromolecules 40, 7140-7147; describes a Reversible addition-fragmentation chain transfer (RAFT) polymerization applied to radiation-induced graft polymerization of styrene from cellulose. Grafted polystyrene chains were cleaved from the cellulose surface by acidic hydrolysis of the cellulose. The control of the grafting process mediated via RAFT is made without any prior functionalization of the surface.

Halima Alem et al.;"Microstructure and thermo-responsive behaviour of poly(N-isopropylacrylamide) brushes grafted in nanopores of track-etched membranes" ; Journal of membrane science, vol. 308, no.1-2, 19 December 2007, pp 75-86; describes the surface-initiated polymerization by aqueous free radical polymerization and atom transfer radical polymerization (ATRP) of N-isopropylacrylamide (NIPAM) from nanopore walls of Poly(ethyleneterephthalate) (PET) membranes.

Alexander Friebe et al.;"Controlled pore functionalization of Poly(ethylene terephthalate) track-etched membranes via surface-initiated atom transfer radical polymerization"; Langmuir, vol.23, no.20, 1 September 2007, pp.10316-10322; describes a new method for surface-initiated atom transfer radical polymerization on the PET.

EP2131189A1 describes a method and device for capturing heavy metal ions included in sewage sludge. The method comprises steps of: (i) placing in the fluid a functionalised radio grafted track-etched membrane FRTEM which contains polymer nanopores; this membrane comprising a first electrode on one side of the membrane, (ii) selectively capturing heavy metal ions inside the polymer nanopores and (iii) applying an anodic stripping voltammetric ASV analysis on the membrane in order to differentiate and quantify captured metal ions, said first electrode being used as an ASV detection electrode.

Haad Bessbousse et al. ;"Functionalized nanoporous track-etched [beta]-PVDF membrane electrodes for lead

determination by square wave anodic stripping voltammetry"; Analytical Methods, vol3, no.6, 1 January 2011, p.1351; describes another method for producing such nanoporous membranes and its use as a nanosensor.

An object of the present invention is to overcome drawbacks of prior art by providing a very sensitive functionalized membrane electrode over a large range of concentrations. Another object of the present invention is to improve selectivity of such an electrode.

In at least preferred embodiments, the present invention provides a method for preparing a functionalized nanoporous track-etched polymer membrane for a nanosensor, this method comprising the steps of :

- considering a polymer film,
- irradiating said polymer film with swift heavy ions in order to produce tracks inside the polymer film, the resulting tracks are constituted of chains scissions, in saturations and radicals,
- chemical etching of the tracks to reveal nanoporous channels inside the polymer film in order to create a membrane, pores diameter of the channels being inferior to 1$\mu$m to keep radicals in the channels wall,
- using the radicals to initiate radical polymerization controlled by RAFT mechanism with a monomer in the nanoporous channels by
  - immersing the polymer membrane in an aqueous solution containing said monomer and a RAFT agent dissolved in the aqueous solution,
  - purging oxygen from the aqueous solution,
  - putting a sealable casing containing the aqueous solution and the membrane into a thermostated water bath during a predetermined time with a predetermined temperature to reach a predetermined grafting yield.

The present invention concerns a novel strategy for preparation of highly sensitive functionalized nanoporous track-etched PVDF membrane by the combination of radiografting and Reversible Addition-Fragmentation chain Transfer (RAFT) polymerization as preferred mechanism of radical controlled polymerization. A polymer such as the Poly(acrylic acid) (PAA) may be specifically grown from the walls of the nanoporous PVDF membrane by RAFT mediated radiografting in a controlled manner. This is quite different from conventional grafting techniques, accepting the disadvantage that the molecular weight and molecular weight distribution are not controlled. Predetermined molecular weights and low polymolecular dispersity indices (PDI) as well as homogeneous composition and desired architecture yielding more sensitive membrane electrodes are achieved via this combination.

The irradiation and the radiografting are preferably two different steps realized in different times.

The present invention allows a polymerization under ’controlled’ conditions that yield well-defined polymers with low PDIs, desired molecular weights, structures and functionalities.

The aqueous solution used in the present invention is a mixture of water and an organic medium. This mixture permits a good miscibility of the RAFT agent and a homogeneous reaction. The RAFT agent used may be a solid miscible in the organic medium and not in the water.

According to the invention, the RAFT agent is an agent taken among the dithiocarbamate family. Preferably, the RAFT agent is the 3-benzylsulfanylthiocarbonylsulfanyl propionic acid (BPATT).

Controlled radical polymerization (CRP) methods combine the inherent advantages of free-radical polymerization with that of living polymerization methods in their own way to yield polymers with predetermined molecular weight and low polydispersity for a great variety of vinyl monomers. Reversible addition-fragmentation chain transfer (RAFT) polymerization is of particular interest among others as a very wide range of (functional) monomers can be polymerized in a controlled manner under non-demanding reaction conditions (e.g., tolerance to oxygen and low temperatures) via this technique. The general mechanism of RAFT polymerization as proposed by the CSIRO group is shown in Scheme 1:

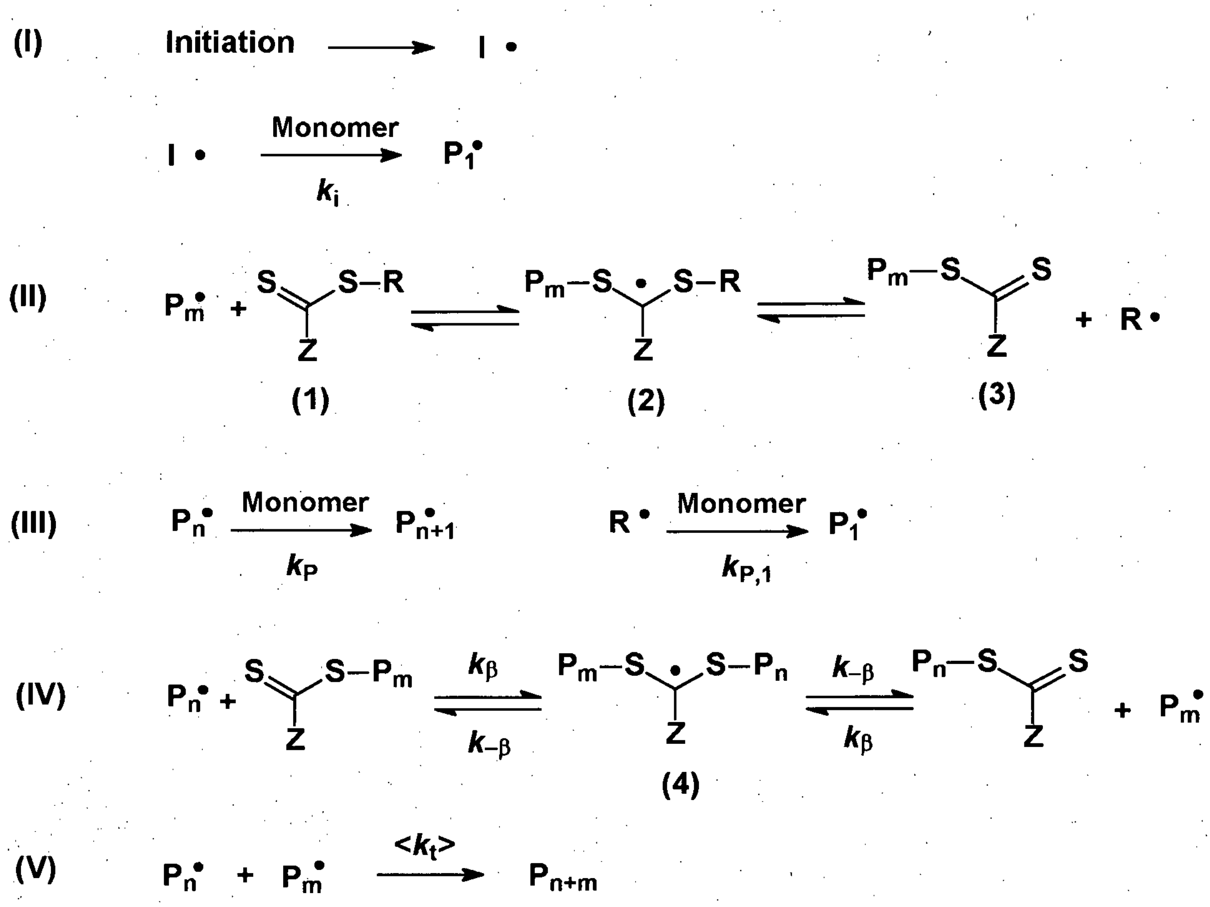


**Scheme 1**

Steps I, III and V are initiation, propagation and termination steps common to all free radical polymerization systems. The termination reactions in Step V are still essentially present and therefore must be included in the reaction scheme although they are reduced by the RAFT system. Steps II and IV specifically apply to RAFT polymerization. Step II shows the initial fragmentation of the chain transfer agent (CTA), i.e. RAFT agent, (1) and the resulting equilibria between the CTA, the radical intermediate species (2) and the macro-CTA (3). The radical generated in this step (R·), as a result of macro-CTA formation, acts as an additional initiator species and will propagate new polymer chains. The main reaction equilibrium, Step IV, is established between the macro-radical intermediate species (4) and the alternating active and dormant propagating polymer chains, i.e. chains capped with a thiocarbonylthio end-group, once all initial CTAs become macro-CTAs. The equilibrium in step IV undergoes rapid exchange between the dormant and active chains such that all propagating chains grow at approximately the same rate, thus providing low polydispersity polymers and, by adjusting the monomer and CTA concentrations, polymers with predetermined molecular weights.

Advantageously, the aqueous solution containing the membrane being in the sealable casing, the step of purging consists in bubbling the aqueous solution in order to render the sealable casing free of oxygen.. This purge may be made by injecting an inert gas such as nitrogen ($N_2$), Argon, Helium, inside a sealable casing containing the aqueous solution and the membrane.

The aqueous solution is preferably obtained from a mixture comprising water and ethanol solution, the RAFT agent being dissolved in the ethanol, and the monomer being then added with this mixture. The mixture may comprise 50% of water and 50% of ethanol solution. However, each component of the mixture may vary from 25 to 75 %.

According to an embodiment of the invention, the monomer constitutes about 50% of the aqueous solution.

According to the invention, to stop the radical polymerization, oxygen is inserted in the sealable casing. This constitutes a mechanism for interrupting the bath when the grafting yield is reached. The sealable casing may be opened to let oxygen enter.

Preferably, the monomer is an acrylic acid. Other monomers may be considered such as acrylates (notably diglycidylmethacrylates, methyl methacrylates), acrylamides (for eg. N-isopropylacrylamide and 2-acrylamido-2-methyl-1-propanesulfonic acid (AMPS)), acrylonitriles , N-vynilpyrrolidone, Styrene and derivatives...

Advantageously, the controlled radical polymerization is a living radical polymerization wherein several successive monomers are used to create block copolymers. To do this, when the solution no longer contains a monomer, a new monomer is introduce, which is sequenced after the previous polymerization. And so on. Each monomer has a particular function dedicated to capture specific ion. When the polymer is the Poly(vinylidene fluoride) (PVDF), the first monomer used to realize the radical polymerization may be the acrylic acid to create the Poly(acrylic acid) or the styrene to create the polystyrene.

In a preferred embodiment, the polymer is the Poly(vinylidene fluoride) (PVDF), in particular, the β form of the PVDF is used. Other forms may be used. Compared to the alpha form, the beta form has a largest crystallinity rate (40% instead of 20-30%). The other forms are very difficult to obtain.

Other polymers may be used, such as the polycarbonate, polyimide and polyethylene terephthalate which are commonly used as polymer matrix for the formation of track-etched membranes.In another aspect, the invention also enables the provision of a new nanosensor for capturing charged molecules, the nanosensor comprising:

- a functionalized radio grafted track-etched membrane (FRTEM) prepared according to the method of the present invention,
- a first electrode arranged on a first side of the functionalized radio grafted track-etched membrane (FRTEM), the first electrode being designed to serve as a working electrode for a stripping voltammetry technique,
- a second electrode arranged on a second side of the functionalized radio grafted track-etched membrane (FRTEM), the second electrode being designed to serve as a counter electrode for a stripping voltammetry technique.

For the purpose of illustrating the invention, there is shown in the drawings a method and a form that are presently preferred; it being understood, however, that this invention is not limited to the precise arrangements and instrumentalities.

- Figure 1 is a schematic view illustrating a process for the preparation of a highly sensitive Functionalized Nanoporous Track-Etched β-PVDF Membrane including a Reversible Addition-Fragmentation Chain Transfer (RAFT) Polymerization;
- Figure 2 is a schematic view illustrating a representation of polymers inside the nanopores with and without a polymerization under 'controlled' conditions;
- Figure 3 is a graph presenting the variation of the grafting yield as a function of the AA concentration during both the RAFT mediated and conventional radiografting; figure 3 illustrates Grafting yield versus monomer concentration for, (♦) RAFT polymerization, (•) Conventional polymerization, wherein [AA]/[BPATT] = 690:1, [Mohr's salt] = 0.25 wt %, water-ethanol (50:50 v/v), grafting temperature and time is of 60 °C and 1 h, respectively;
- Figure 4 is a graph illustrating grafting kinetics for the RAFT mediated radiografting in 30 % AA solution; Grafting kinetics: [AA] = 30 % v/v, [AA]/[BPATT] = 690:1, water-ethanol (50:50 v/v), grafting temperature and time is of 60 °C and 1 h, respectively;
- Figure 5 is a graph illustrating the FTIR spectra of pristine and PAA functionalized PVDF membranes with different grafting yields;
- Figure 6 is a graph illustrating the measured current for FMEs (functionalized membrane electrodes) with different grafting yields in 3 ppb Pb2+ solution; Charge vs grafting yield of FMEs prepared by (♦) RAFT polymerization and (•) conventional method;
- Figure 7 is a graph illustrating the comparison of the performances of RAFT mediated FMEs (functionalized membrane electrodes) with those of conventional FMEs at various concentrations of lead; Charge versus concentrations for FMEs prepared by (♦) RAFT polymerization and (•) conventional method;
- Figure 8 is a graph illustrating the 0-6 ppb concentrations of the figure 7.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents, and alternatives falling within the scope of the present invention as defined by the appended claims.

Irradiation of PVDF (Polyvinylidene Fluoride) by swift heavy ions yields very stable radicals able to initiate monomer grafting in the damage tracks due to the crystalline nature of the polymer. Etching the damage tracks of swift heavy ions by alkaline treatment reveals nanoporous channels in the polymer membrane. The pore diameter increases with etching time, and it is about 40 nm after 30 min. The obtained nanoporous polymer membranes (element 1 on figure 1) do not need to undergo subsequent e-beam irradiation to increase radicals in the polymer bulk for submicron pore diameters. After etching time less than one hour, the radical residues within the nanoporous walls are sufficient for radio grafting. In general, in the presence of vinyl monomers such as AA, a radical polymerization takes place by a radiografting to specifically functionalize the nanoporous walls. PAA functionalized nanoporous β-PVDF membranes can then be transformed into electrodes by the deposition of a thin gold or conductive layer onto the membrane surfaces. In order to be able to fabricate an efficient functionalized membrane electrode (FME), one of the critical parameters to take into consideration is the grafting yield of the PAA in the nanoporous walls.

If the PAA grafting yield of the nanoporous β-PVDF membranes is very high, the pores may mostly be filled by PAA so it will be impossible to have open pores for ion adsorption after the gold sputtering. Insufficient grafting ratios, on the other hand, will lead the FMEs to work with lower capacity. An optimum grafting yield for the highest performance of the FMEs has been obtained around 3 -15 wt%.

In order to obtain such a grafting yield during the preparation of the nanoporous β-PVDF membrane, the present invention comprises a polymerization under 'controlled' conditions that yield well-defined polymers with low polymolecular dispersity indices, desired molecular weights, structures and functionalities.

Figure 1 describes steps for the preparation of a functionalized nanoporous track-etched PVDF membrane according to the invention. The nanoporous membrane 1 is first prepared before functionalization. Such a preparation of a nanoporous membrane before functionalization may comply with the preparation disclosed in WO 2009/147244.

At the step 1 on figure 1, a RAFT agent 2 is totally dissolved in an organic solution such as the ethanol 3. At the step 2, a mixture 4 is constituted by adding water in the solution containing the ethanol and the RAFT agent. At the step 3, the monomer 5 such as the acrylic acid is added with the mixture 4 to produce an aqueous solution 6. Then, the nanoporous membrane 1 and the aqueous solution 6 are put inside a sealable casing 7. The aqueous solution may after undergo a bubbling step 4 during 15mn in order to purge oxygen from the aqueous solution by using a purge mechanism 8 which injects nitrogen $N_2$ inside the sealable casing 7 and evacuates oxygen $O_2$ from the sealable casing.

At the step 5, the sealable casing containing the aqueous solution 6 and the nanoporous membrane 1 is put into a thermostated water bath 9 during one hour at 60°C in order to obtain 10% grafting yield of the monomer inside walls of nanoporous. To stop the grafting process, oxygen may be injected in the sealable casing 7.

Figure 2 shows a PAA functionalized nanoporous β-PVDF membrane 10 which is then transformed into electrode 11 by the deposition of a thin gold or conductive layer onto the membrane surfaces. The left frame of the figure 2 shows a highly schematic representation of an uncontrolled free radical polymerization on the nanoporous walls according to the prior art. The polymerization is completely disorganized.

The right frame of the figure 2 shows a highly schematic representation of a controlled radical polymerization on the nanoporous walls according to the present invention. The polymerization is well organized.

With the present invention, the re-usability of a functionalized membrane electrode (nanosensor) is improved. As a matter of fact, the memory effect is greatly limited because the migration of captured elements is more easily to the electrodes, the nanopores being less clogged.

Figure 3 presents the variation of the grafting yield as a function of the AA concentration during both the RAFT mediated and conventional radiografting. It can be seen that by increasing monomer concentration, the grafting yield in the nanoporous walls increases steadily. The grafting yields observed in conventional radiografting are higher compared to RAFT mediated ones. This is attributed to the higher polymerization rate and molecular weights of the PAA grafts grown from the nanoporous walls. In order to see the effect of grafting time, grafting kinetics were performed that are shown in Figure 4 for the RAFT mediated radiografting in 30 % AA solution. As can be seen from the figure, grafting yield sharply increases in the first hour. Beyond 1 h, the grafting rate slows down leading to a saturation of the grafting yield.

Figure 5 presents the FTIR (Fourier Transform Infrared) spectra of pristine and PAA functionalized PVDF membranes with different grafting yields. Inspection of the FTIR spectra demonstrates the grafting of PAA by the appearance of a new peak at 1710 $cm^{-1}$ corresponding to the O-C=O stretching of PAA. As can be seen in Figure 5, the intensity of this peak increases proportionally with the amount of PAA grafted from the PVDF film.

The PAA functionalized nanoporous PVDF films synthesised both via RAFT or conventional method were transformed to membrane electrodes by sputtering a thin (35 nm) Au film through 0.4 cm diameter holes in an aluminium mask onto each surface of the film (see fig. 2). The pores of the film remain open after sputtering. The Au, which protrudes into the membrane's pores, forms 30 nm diameter, 100 nm long nanoelectrodes. The result is a membrane of with random array of $10^{10}$ parallel nanoelectrodes/$cm^2$ separated from the counter electrode by 9 $\mu$m long 30 nm diameter pores. After sputtering the Au film through a mask, a 1.5 x 0.6 cm square of membrane is cut out and connected to stainless steel wires with silver paste. The contacts are first protected with hot wax and then fingernail polish.

FMEs with different graft yields were performed in 3 ppb $Pb^{2+}$ solution. During the immersion of a FME in a sample containing heavy metal ions, the membrane absorbs some of the metal cations by the PAA grafted in the nanopores of the β-PVDF membrane. For the electrochemical analysis the FME is connected to a potentiostat and placed at a negative potential. The negative potential reduces the absorbed metals ions that are very close to the working electrode, from the poly (acrylic acid) in the pores to their metallic state at the Au surface. After the reduction, square wave anodic stripping voltammetry (SW-ASV) analysis is performed in order to oxidize the metal from the working electrode surface and measure the resulting current. Figure 6 presents the measured current for FMEs with different grafting yields in 3 ppb $Pb^{2+}$ solution : charge vs grafting yield of FMEs prepared by (♦) RAFT polymerization and (•) conventional method.

As can be seen in Figure 6, the performance of the FMEs increases with the grafting yield to some degree due to the increase of the amount of adsorbent -COOH groups, then it starts to decrease. The decreasing is attributed to the closing of pores by the bulk of the grafted PAA. The optimum grafting looks to be around 9% and 13% for RAFT mediated and conventional radiograftings, respectively. In general, the grafting yield may range from 0 to 50% depending on conditions. On figure 6, the sensitivity is much higher in the method according to the invention over the conventional method.

Figure 6 also clearly shows that FMEs synthesized by RAFT polymerization perform significantly better than the ones prepared by conventional method. The RAFT mechanism is a polymerization technique by which the molecular weight of the polymer can be easily predetermined and the architecture and polydispersity can be controlled fairly well. Therefore, the difference in the performances of FMEs should be mainly attributed to the differences in the molecular weights of the grafted PAA chains. Table 1 hereafter presents the number-average molecular weight, $M_n$, and the polymolecular dispersity index (PDI, i.e., the ratio of weight-average molecular weight, $M_w$, to $M_n$) values of the free (non-grafted) polymers formed in solution during the radiografting experiments. The used RAFT agent for the experiment summarized in Table 1 is the 3-benzylsulfanylthiocarbonylsulfanyl propionic acid (BPATT).

**Table 1.** Number-average molecular weight and polymolecular dispersity indices for free PAA formed during the Reversible addition fragmentation chain transfer (RAFT) mediated radiograft polymerization from track etched nanoporous PVDF membranes. [AA]/[BPATT] = 690:1, water-ethanol (50:50 v/v), grafting temperature and time is of 60 °C and 1 h, respectively.

| Entry | [AA] | convn[a] (%) | $M_{n,theor}$[b] ($g{\cdot}mol^{-1}$) | $M_{n,SEC}$[c] ($g{\cdot}mol^{-1}$) | PDI[c] |
|---|---|---|---|---|---|
| 1 | 10 | 2.0 | 1266 | 2970 | 1.43 |
| 2 | 20 | 2.2 | 1365 | 2680 | 1.36 |
| 3 | 25 | 2.1 | 1315 | 2890 | 1.42 |
| 4 | 30 | 2.3 | 1415 | 4160 | 1.39 |
| 5 | 35 | 2.2 | 1365 | 3550 | 1.54 |
| 6 | 40 | 2.0 | 1266 | 4450 | 1.59 |
| 7 | 50 | 1.7 | 1117 | 4700 | 1.62 |
| control[d] | 20 | 3.1 | - | 502.850 | 2.77 |
| control[d] | 30 | 4.2 | - | 324.600 | 2.85 |
| control[d] | 40 | 4.7 | - | 372.800 | 2.52 |

[a]Monomer conversion was determined gravimetrically. [b]Theoretical number-average molecular weight, $M_{n,theor}$, was calculated from the monomer conversion using equation 2 here below. [c]Number-average molecular weight, $M_n$, and polymolecular dispersity indices, PDI, determined via size-exclusion chromatography, SEC, using a phosphate buffer (pH: 7.2, 0.3 M NaCl) as eluent at room temperature (flow rate: 1 $mLmin^{-1}$) with poly(acrylic acid) (PAA) standards. [d]conventional radiografting results where the PVDF films were treated identically with the samples subjected to RAFT mediated radiografting with the exception of addition of a Mohr's salt (0.25%w/w) instead of BPATT, i.e. RAFT agent.

The controlled fashion of the polymerization for RAFT mediated samples is demonstrated in Table 1 by the agreement between the experimental and theoretical number-average molecular weights, $M_n$ and $M_{n,theor}$, respectively (see the entries 1-7 in Table 1). It should be mentioned here that the experimental molecular weights are generally

higher than the corresponding theoretical values. The reason for this may be that the establishment of the RAFT equilibrium is slow at the beginning of polymerizations, while the calculation of theoretical molecular weight is based on a fast establishment of the main RAFT mechanism. Therefore; it is quite expected to observe such differences considering the low monomer conversion values. In most cases, the PDI remains below the theoretical lower limit of 1.5 for conventional free-radical polymerization. Some samples present higher PDI values, but this may be attributed to the intrinsic character of PAA; even the PDI values of PAA standards changes in the range of 1.34 - 1.75. Conventional radiografting, on the other hand, yields very high $M_n$ and broader molecular weight distribution (see entries encoded as control in Table 1). These results clearly indicate the controlled fashion of the polymerization in the existence of the RAFT agent, BPATT. The grafted PAA chains in the nanoporous walls are expected to have similar characteristics with the free polymers in the solution. Therefore, it is a fact that an appreciable sterical hindrance against the diffusion and adsorption of the target metal ions would exist in the nanopores of FMEs synthesized by the conventional method due to the high molecular weights of the grafted chains. These chains may block the entrance of the nanopores of around 40 nm by coiling and branching. Hence, not all the -COOH groups will be practically available for the adsorption. Moreover, it might be difficult for the electrodeposition to efficiently extract the adsorbed $Pb^{2+}$ from the PAA in the nanoporous walls due to the dense form of PAA. RAFT mediated chains; on the other hand, have around 45 repeating units (this corresponds to a molecular weight of around 3200 g/mol). These linear short chains are expected to spread more uniformly though the nanoporous walls and they should be more enable for both adsorption of the heavy metal ions and consequent electrodeposition.

PAA grafted nonoporous PVDF based FMEs for the adsorption of $Pb^{2+}$ by conventional method have been prepared. Figure 7 presents the comparison of the performances of RAFT mediated FMEs with those of conventional FMEs at various concentrations of lead. As can be easily seen from the figure, RAFT mediated FMEs are more sensitive at all concentrations studied compared the conventional ones : charge versus concentrations for FMEs prepared by (♦) RAFT polymerization and (●) conventional method. This again shows how sensitive and effective the FMEs prepared by RAFT polymerization are.

The invention relates to the following materials and processes:

***Materials:*** β-poly(vinylidene fluoride) (β-PVDF) films of 9 μm thickness were provided by PiezoTech SA. The RAFT agent used in this study, 3-benzylsulfanylthiocarbonylsulfanyl propionic acid (BPATT), was prepared according to the procedure described elsewhere. Acrylic acid (AA), ethanol, toluene, potassium hydroxide, potassium permanganate, potassium disulfite, Mohr's salt ($(NH_4)_2Fe(SO_4)_2\ 6H_2O$), phosphate buffer saline (PBS) were purchased from Sigma-Aldrich.

***Irradiation:*** Prior to the swift heavy ion irradiation β-PVDF films are toluene-extracted for 24 h. The irradiation was performed at the GANIL irradiation centre (Caen, France). Films were irradiated with Kr ions (10.37 Mev/amu, fluence $10^7$ to $10^{10}$ $cm^{-2}$) in a He atmosphere. The irradiated films were stored at -20°C in a $N_2$ atmosphere until chemical etching and radio grafting.

***Chemical etching:*** β-PVDF irradiated films were chemically etched using permanganate solution (0.25 M) in a highly alkaline medium (KOH, 10M) at 65°C for 30 min. After etching the membranes obtained were washed in potassium disulfite solution (15%) and deionized water.

***Radiografting***: In a typical RAFT-mediated radiografting, etched β-PVDF films were immersed at room temperature into a radio grafting solution containing AA and BPATT in a mixture of deionized water and ethanol (water/EtOH = 50:50 v/v). EtOH was required to allow complete dissolution of the RAFT agent. In all experiment sets, RAFT agent concentration is adjusted so that PAA with expected molecular weight of 50.000 g/mol is formed at complete conversion of the monomer, i.e. [AA]/[BPATT] = 690:1. The polymerization solution in purgeable glass tube was then connected to a Schlenk line. After 15 min of N2 bubbling at room temperature, the glass tube is sealed and put into a thermostated water bath at 60°C for 1 h. The radiografted film is washed with water and then Sohxlet extracted in boiling water for 24 hours in order to extract free homopolymer. The membrane was dried to a constant weight under vacuum at 50°C. The grafting yield (G, wt.%) was calculated using the following equation:

$$G = \frac{W_2 - W_1}{W_1} \times 100 \qquad \text{(Equation 1)}$$

where $W_1$ (g) is the weight of the etched PVDF film and $W_2$ (g) is the dry weight of the PAA grafted film. Conversion (%) was taken as the fraction of the monomer that polymerized and was determined gravimetrically after drying the

polymerization solution initially in freeze-dryer and then in a vacuum oven. The theoretical number-average molecular weight, $M_{n,theor}$, was calculated according to the following equation:

$$M_{n,theor} = M_{CTA} + \frac{n_m^0 M_M}{n_{CTA}^0}.conversion \quad \text{(Equation 2)}$$

Where $M_{n,theor}$ is the theoretical number-average molecular weight of the polymer, $n_m^0$, number of moles of the monomer initially present in the system, $M_M$, molecular weight of the monomer, $n_{CTA}^0$, number of moles of chain transfer agent (CTA), i.e. RAFT agent, initially present in the system and $M_{CTA}$, molecular weight of the CTA. As a parallel study, a conventional radiografting was also performed. The PVDF films were treated identically with the samples subjected to RAFT mediated radiografting with the exception that no BPATT, i.e. RAFT agent, was added to the medium. Instead, Mohr's salt (0.25%w/w) was added to decrease the homopolymerization and to adjust the grafting yield.

***Size Exclusion Chromatography (SEC) Analysis:*** The molecular weight analysis of free (non-grafted) PAA formed during the radiografting from PVDF films was performed in Phosphate buffer (pH: 7.2, 0.3 M NaCl) at room temperature (flow rate: 1 $mLmin^{-1}$) using a Waters Breeze model Gel Permeation Chromatograph. The system was equipped with a Polymer Laboratories 3.0 $\mu$m bead-size column (300 $\times$ 7.5 mm). Calibration was performed with PAA standards with molecular weights of 1250 to $1.1\times10^6$ $gmol^{-1}$. Prior to inject the samples to SEC, the product dried from the radiografting solution was dissolved in 1 ml of eluent, then PAA was precipitated by adding excess amount of acetone followed by the centrifuging at 15.000 rpm for 10 min to yield PAA precipitate from a cloudy solution.

***Infra-red spectroscopy:*** FTIR spectra of PVDF were obtained with a Nicolet Magna-IR 750 spectrometer equipped with a DGTS detector. Spectra were recorded in Attenuated Total Reflexion mode (ATR) using a diamond-crystal with single reflection. Spectra were collected by cumulating 16 scans at a resolution of 4 $cm^{-1}$.

***Solutions**:* The $Pb^{2+}$ solutions were diluted from 1.000$\mu$g/mL AAS calibration standards (Alfa Aesar) or from $PbCO_3$ powder 99% (VWR). The electrolyte for the voltammetry measurements was 0.1 M sodium acetate (Sigma-Aldrich). All solutions were made with 18 Mohm deionised water (Aquadem Veolia). 100 ml polypropylene containers (VWR) were used for dilution and analysis to avoid loss of $Pb^{2+}$ due to surface adsorption on glass.

***Connections**:* The functionalized membrane was metalized by gold sputtering on both sides with a K550 gold sputter (EMITECH). Gold sputtering targets were purchased from NewMet (New Metals & Chemicals LTD). The metalized sides are then connected to 0.5 mm diameter stainless steal wires with silver paste (FERRO, CDS Electronique). The connections were water proofed with hot wax and fingernail polish.

***Voltammetry**:* The voltammetry was performed in a three-compartment electrochemical cell controlled by a PalmSens potentiostat (PalmSens) or a BiStat 3200 (Uniscan). A Ag/AgCl (3M KCl) reference electrode (METROHM) was used for all measurements.

The present invention concerns a combination of RAFT polymerization and radiografting technique for the preparation of highly sensitive novel PAA functionalized nanoporous track-etched $\beta$-PVDF membrane electrodes. The method presented for the fabrication of the FMEs is very versatile; the chemical nature of the polymer that is radiografted in the nanopores has a direct impact on the kind and amount of the metal ions to be trapped and analyzed. That is to say, changing the grafted polymer opens up new doors for the adsorption of a variety of metal ions. RAFT polymerization makes this method even more sensitive, effective and facile. Given the ease of fabrication and benefits associated with the FMEs synthesized, it is believed that the reported method may represent an advantage in the ability to prepare new electrodes.

## Claims

1. Method for preparing a functionalized nanoporous track-etched polymer membrane for a nanosensor, this method comprising the steps of :

   - considering a polymer film,
   - irradiating said polymer film with swift heavy ions in order to produce tracks inside the polymer film, the resulting tracks are constituted of chains scissions, in saturations and radicals,
   - chemical etching of the tracks to reveal nanoporous channels inside the polymer film in order to create a membrane, pores diameter of the channels being inferior to 1$\mu$m to keep radicals in the channels wall,

**characterized in that** it further comprises the step of:

- using the radicals to initiate radical polymerization controlled by Reversible Addition-Fragmentation chain Transfer (RAFT) mechanism with a monomer in the nanoporous channels by
- immersing the polymer membrane in an aqueous solution containing said monomer and a RAFT agent dissolved in the aqueous solution,
- purging oxygen from the aqueous solution,
- putting a sealable casing containing the aqueous solution and the membrane into a thermostated water bath during a predetermined time with a predetermined temperature to reach a predetermined grafting yield, the RAFT agent being an agent taken among the dithiocarbamate family.

**2.** Method according to claim 1, **characterised in that** the RAFT agent is the 3-benzylsulfanylthiocarbonylsulfanyl propionic acid (BPATT).

**3.** Method according to any of preceding claims, **characterised in that**, the aqueous solution containing the membrane being in the sealable casing, the step of purging consists in bubbling the aqueous solution in order to render the sealable casing free of oxygen.

**4.** Method according to claim 3, **characterised in that** it further comprises a step of injecting inert gas inside the sealable casing containing the aqueous solution and the membrane.

**5.** Method according to any of preceding claims, **characterised in that** the aqueous solution is obtained from a mixture comprising water and ethanol solution, the RAFT agent being dissolved in the ethanol, and the monomer being then added with this mixture.

**6.** Method according to claim 5, **characterised in that** the mixture comprises 50% of water and 50% of ethanol solution in proportion to the total volume.

**7.** Method according to any of preceding claims, **characterised in that** the monomer constitutes about 50% of the aqueous solution in proportion to the total volume.

**8.** Method according to any of preceding claims, **characterised in that** the polymer is the Poly(vinylidene fluoride) (PVDF).

**9.** Method according to any of preceding claims, **characterised in that** the monomer is an acrylic acid.

**10.** Method according to any of preceding claims, **characterised in that** the controlled radical polymerization is a living radical polymerization wherein several successive monomers are used to create block copolymers.

**11.** Method according to claim 10, **characterised in that** the polymer is the Poly(vinylidene fluoride) (PVDF) and a first monomer used to realize the radical polymerization is the acrylic acid to create the Poly(acrylic acid) or the styrene to create the polystyrene.

**12.** Method according to any of preceding claims, **characterised in that** the polymer is the a β-Poly(vinylidene fluoride) (β-PVDF).

**13.** Method according to any of preceding claims, **characterised in that** to stop the radical polymerization, oxygen is inserted in the sealable casing.

## Patentansprüche

**1.** Verfahren zur Herstellung einer funktionalisierten nanoporösen Spur-geätzten Polymermembran für einen Nanosensor, wobei das Verfahren die Schritte umfasst:

- Bereitstellen eines Polymerfilms,
- Bestrahlen des Polymerfilms mit schnellen Schwerionen, um Spuren im Inneren des Polymerfilms zu erzeugen, wobei die resultierenden Spuren von Kettenschnitten, Ungesättigtheiten und Radikalen gebildet werden,

- chemisches Ätzen der Spuren, um nanoporöse Kanäle im Inneren des Polymerfilms erkennen zu lassen, um eine Membran herzustellen, wobei der Porendurchmesser der Kanäle weniger als 1 μm ist, um Radikale in der Kanalwand zu halten,
- **dadurch gekennzeichnet, dass** es außerdem den Schritt umfasst:
- Verwendung der Radikale, um eine radikalische Polymerisation, die durch einen reversiblen Additions-Fragmentierungs-Kettenübertragungs-Mechanismus (Reversible Addition-Fragmentation chain Transfer (RAFT) mechanism) reguliert wird, mit einem Monomer in den nanoporösen Kanälen zu initiieren, durch:
- Eintauchen der Polymermembran in eine wässrige Lösung, die das Monomer und ein RAFT-Mittel gelöst in der wässrigen Lösung enthält,
- Spülen von Sauerstoff aus der wässrigen Lösung,
- Stellen eines dicht verschließbaren Gehäuses, das die wässrige Lösung und die Membran enthält, in ein thermostatiertes Wasserbad während einer vorbestimmten Zeit mit einer vorbestimmten Temperatur, um eine vorbestimmte Pfropfungsausbeute zu erreichen, wobei das RAFT-Mittel ein Mittel ist, das aus der Dithiocarbamatfamilie entnommen ist.

2. Verfahren gemäß Anspruch 1, **dadurch gekennzeichnet, dass** das RAFT-Mittel 3-Benzylsulfanylthiocarbonylsulfanylpropionsäure (BPATT) ist.

3. Verfahren gemäß einem der vorangehenden Ansprüche, **dadurch gekennzeichnet, dass** die wässrige Lösung, die die Membran enthält, in dem dicht verschließbaren Gehäuse ist, der Schritt des Spülens in einem Durchblasen der wässrigen Lösung besteht, um das dicht verschließbare Gehäuse frei von Sauerstoff zu machen.

4. Verfahren gemäß Anspruch 3, **dadurch gekennzeichnet, dass** es außerdem einen Schritt des Injizierens von Inertgas in das Innere des dicht verschließbaren Gehäuses, das die wässrige Lösung und die Membran enthält, umfasst.

5. Verfahren gemäß einem der vorangehenden Ansprüche, **dadurch gekennzeichnet, dass** die wässrige Lösung aus einem Gemisch, das Wasser und Ethanollösung umfasst, erhalten wird, wobei das RAFT-Mittel in dem Ethanol gelöst wird und das Monomer dann in dieses Gemisch gegeben wird.

6. Verfahren gemäß Anspruch 5, **dadurch gekennzeichnet, dass** das Gemisch 50% Wasser und 50% Ethanollösung im Verhältnis zu dem gesamten Volumen umfasst.

7. Verfahren gemäß einem der vorangehenden Ansprüche, **dadurch gekennzeichnet, dass** das Monomer etwa 50% der wässrigen Lösung im Verhältnis zu dem gesamten Volumen ausmacht.

8. Verfahren gemäß einem der vorangehenden Ansprüche, **dadurch gekennzeichnet, dass** das Polymer Poly(vinylidenfluorid) (PVDF) ist.

9. Verfahren gemäß einem der vorangehenden Ansprüche, **dadurch gekennzeichnet, dass** das Monomer eine Acrylsäure ist.

10. Verfahren gemäß einem der vorangehenden Ansprüche, **dadurch gekennzeichnet, dass** die regulierte radikalische Polymerisation eine lebende radikalische Polymerisation ist, in der mehrere sukzessive Monomere verwendet werden, um Blockcopolymere herzustellen.

11. Verfahren gemäß Anspruch 10, **dadurch gekennzeichnet, dass** das Polymer Poly(vinylidenfluorid) (PVDF) ist und ein erstes Monomer, das verwendet wird, um die radikalische Polymerisation durchzuführen, die Acrylsäure ist, um Poly(acrylsäure) herzustellen, oder Styrol ist, um Polystyrol herzustellen.

12. Verfahren gemäß einem der vorangehenden Ansprüche, **dadurch gekennzeichnet, dass** das Polymer β-Poly(vinylidenfluorid) (β-PVDF) ist.

13. Verfahren gemäß einem der vorangehenden Ansprüche, **dadurch gekennzeichnet, dass** zum Stoppen der radikalischen Polymerisation Sauerstoff in das dicht verschließbare Gehäuse eingebracht wird.

## Revendications

1. Procédé de préparation d'une membrane polymère nanoporeuse fonctionnalisée à pistes gravées pour nanocapteur, ce procédé comprenant les étapes suivantes :

   - fourniture d'un film polymère,
   - irradiation dudit film polymère avec des ions lourds rapides afin de produire des pistes à l'intérieur du film polymère, les pistes résultantes étant constituées de scissions de chaînes, dans les insaturations et radicaux,
   - gravure chimique des pistes pour révéler des canaux nanoporeux à l'intérieur du film polymère afin de créer une membrane, le diamètre des pores des canaux étant inférieur à 1 $\mu$m pour conserver les radicaux dans la paroi des canaux,

   **caractérisé en ce qu'**il comprend en outre les étapes suivantes :

   - utilisation des radicaux pour initier une polymérisation radicalaire contrôlée par un mécanisme de transfert de chaîne réversible par addition-fragmentation (RAFT) avec un monomère dans les canaux nanoporeux par
   - immersion de la membrane polymère dans une solution aqueuse contenant ledit monomère et un agent RAFT dissous dans la solution aqueuse,
   - purge de l'oxygène de la solution aqueuse,
   - placement d'un boîtier scellable contenant la solution aqueuse et la membrane dans un bain d'eau thermorégulé pendant une durée prédéterminée à une température prédéterminée pour atteindre un rendement de greffage prédéterminé, l'agent RAFT étant un agent choisi dans la famille des dithiocarbamates.

2. Procédé selon la revendication 1, **caractérisé en ce que** l'agent RAFT est l'acide 3-benzylsulfanylthiocarbonylsulfanylpropionique (BPATT).

3. Procédé selon l'une quelconque des revendications précédentes, **caractérisé en ce que**, la solution aqueuse contenant la membrane étant dans le boîtier scellable, l'étape de purge consiste en le bullage de la solution aqueuse afin que le boîtier scellable soit exempt d'oxygène.

4. Procédé selon la revendication 3, **caractérisé en ce qu'**il comprend en outre une étape d'injection d'un gaz inerte à l'intérieur du boîtier scellable contenant la solution aqueuse et la membrane.

5. Procédé selon l'une quelconque des revendications précédentes, **caractérisé en ce que** la solution aqueuse est obtenue à partir d'un mélange comprenant une solution d'eau et une solution d'éthanol, l'agent RAFT étant dissous dans l'éthanol, et le monomère étant ensuite ajouté à ce mélange.

6. Procédé selon la revendication 5, **caractérisé en ce que** le mélange comprend une solution contenant 50 % d'eau et 50 % de solution d'éthanol par rapport au volume total.

7. Procédé selon l'une quelconque des revendications précédentes, **caractérisé en ce que** le monomère constitue environ 50 % de la solution aqueuse par rapport au volume total.

8. Procédé selon l'une quelconque des revendications précédentes, **caractérisé en ce que** le polymère est le poly(fluorure de vinylidène) (PVDF).

9. Procédé selon l'une quelconque des revendications précédentes, **caractérisé en ce que** le monomère est un acide acrylique.

10. Procédé selon l'une quelconque des revendications précédentes, **caractérisé en ce que** la polymérisation radicalaire contrôlée est une polymérisation radicalaire vivante dans laquelle plusieurs monomères successifs sont ajoutés pour créer des copolymères blocs.

11. Procédé selon la revendication 10, **caractérisé en ce que** le polymère est le poly(fluorure de vinylidène) (PVDF) et un premier monomère utilisé pour réaliser la polymérisation radicalaire est l'acide acrylique pour créer le poly(acide acrylique) ou le styrène pour créer le polystyrène.

12. Procédé selon l'une quelconque des revendications précédentes, **caractérisé en ce que** le polymère est un $\beta$-

poly(fluorure de vinylidène) (β-PVDF).

13. Procédé selon l'une quelconque des revendications précédentes, **caractérisé en ce que**, pour arrêter la polymérisation radicalaire, de l'oxygène est inséré dans le boîtier pouvant être fermé hermétiquement.

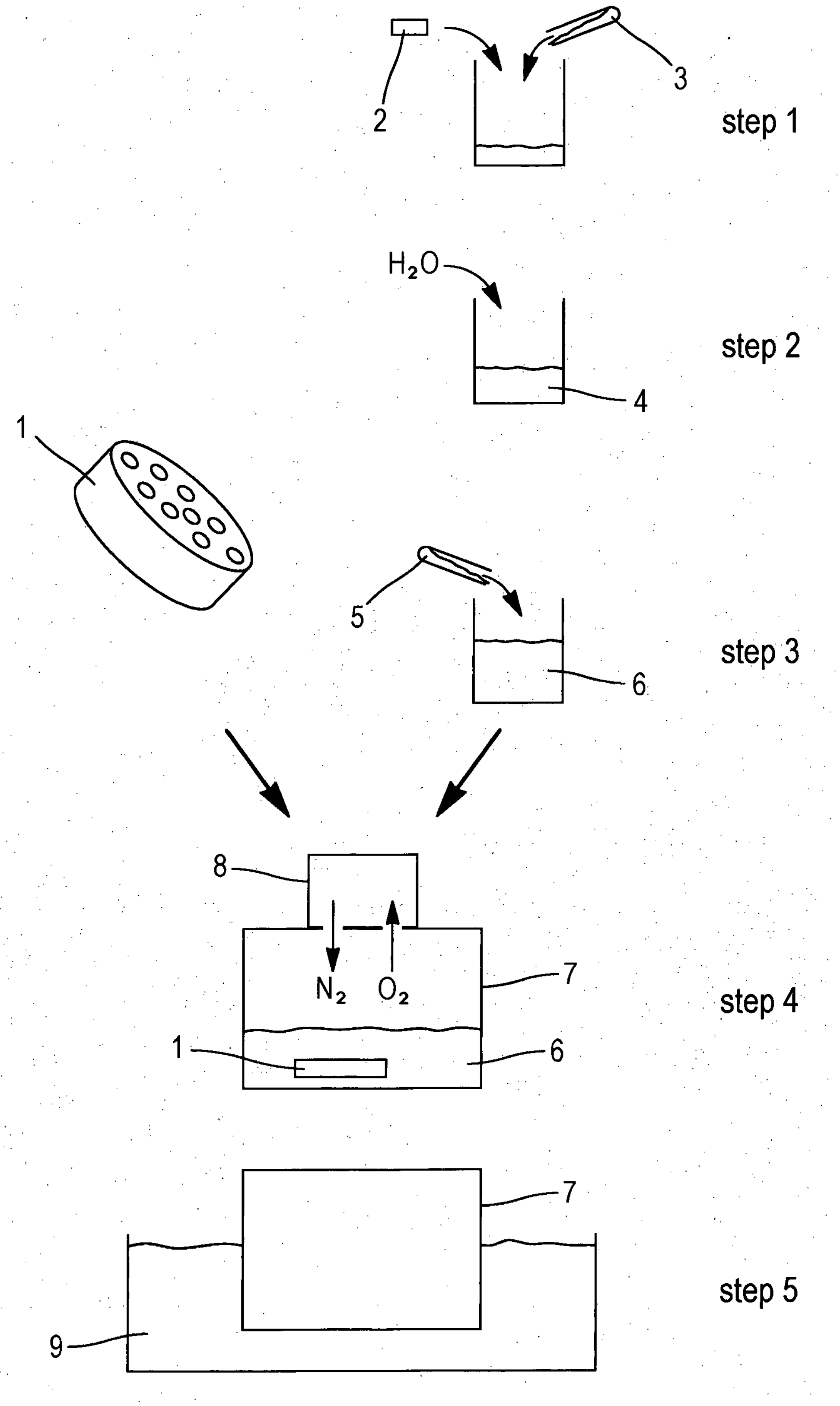


FIG. 1

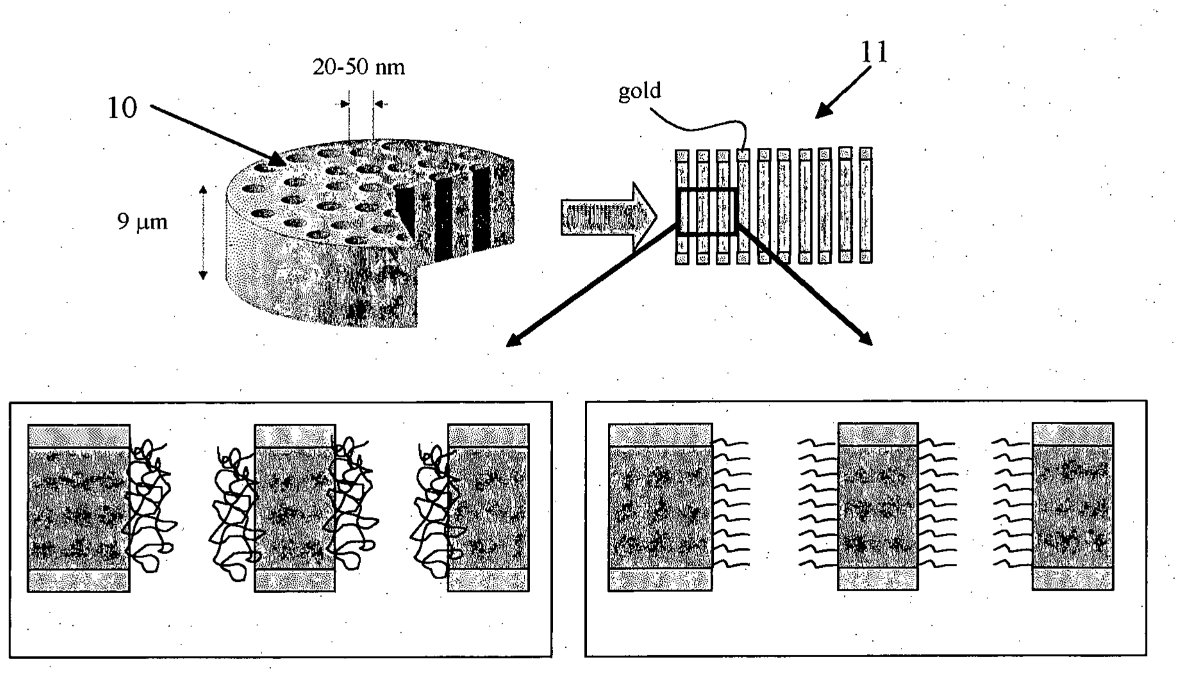


FIGURE 2

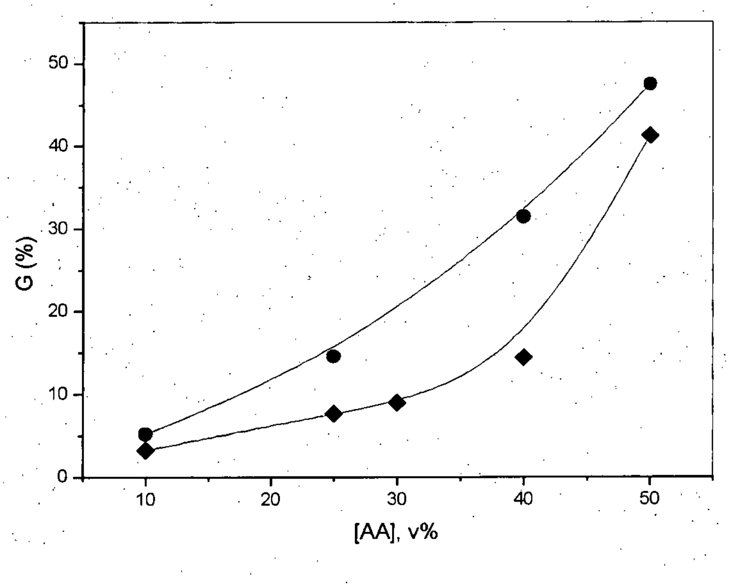


FIGURE 3

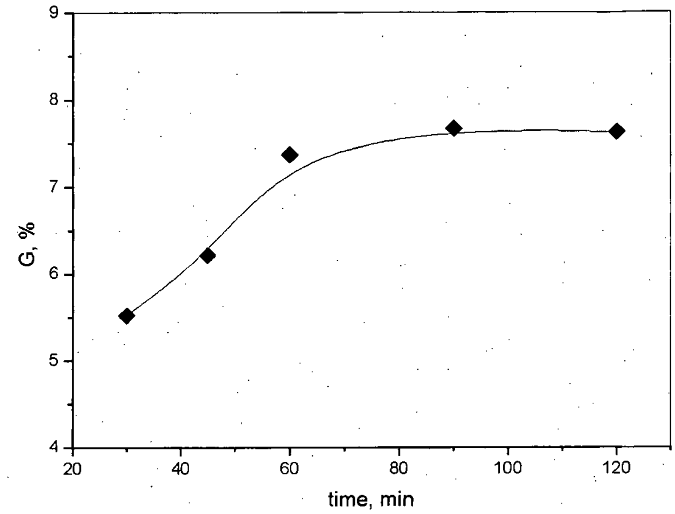


FIGURE 4

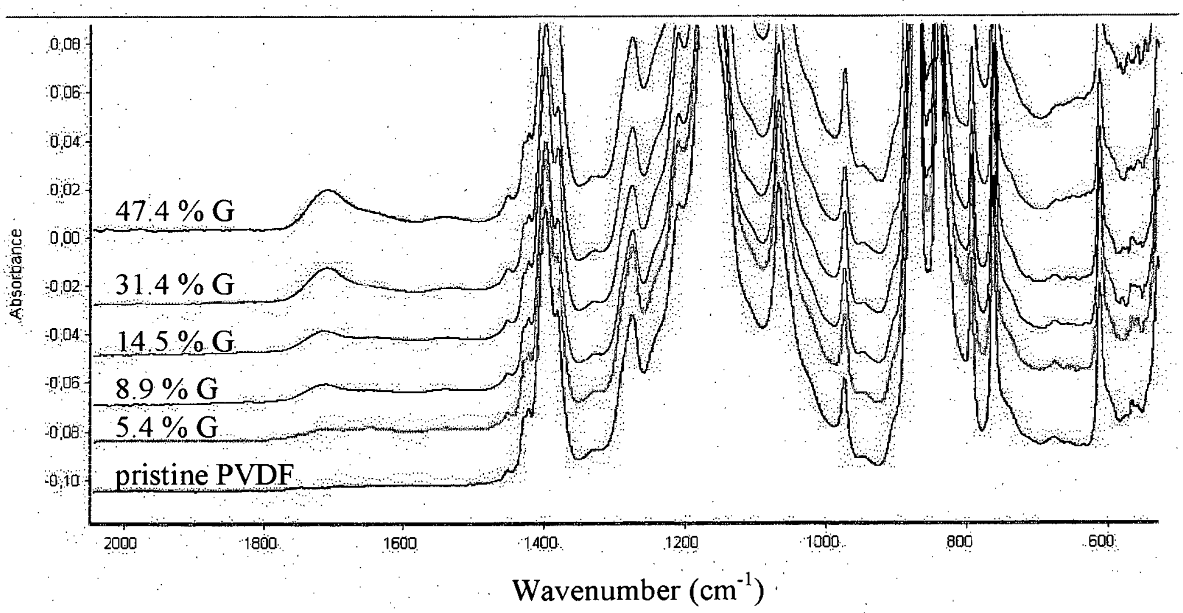


FIGURE 5

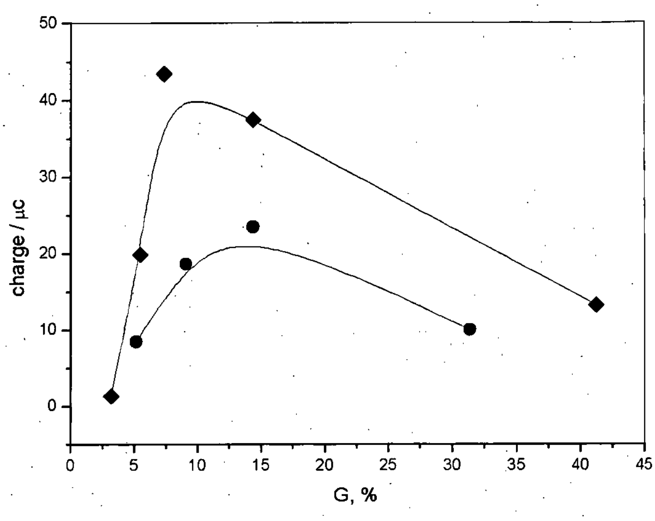


FIGURE 6

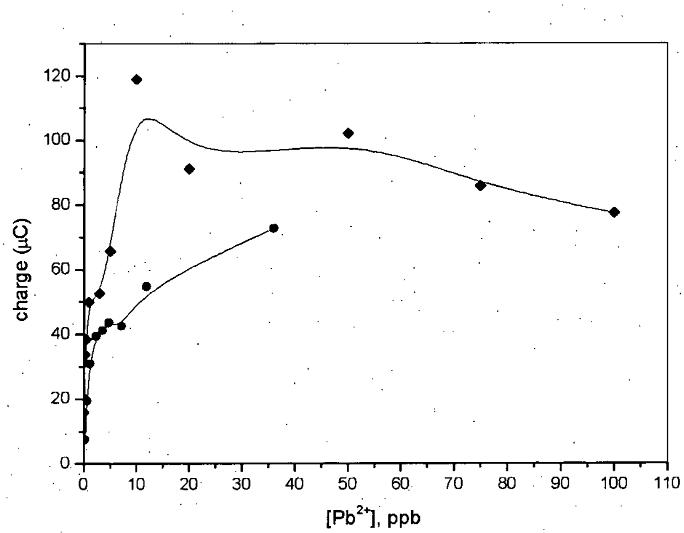


FIGURE 7

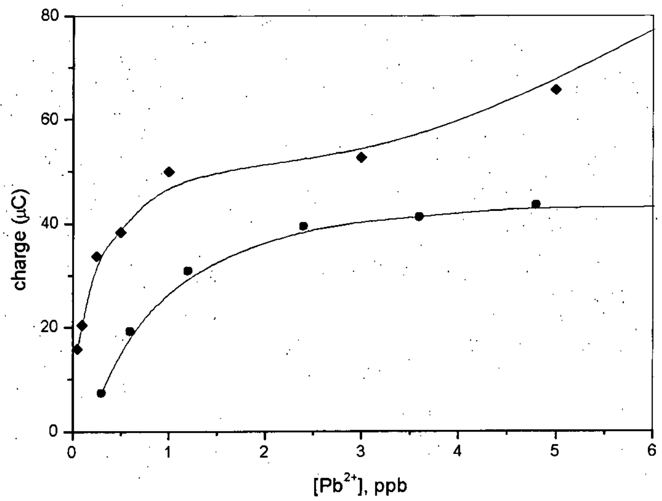


FIGURE 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2131189 A1
- WO 2009147244 A

### Non-patent literature cited in the description


- **M. GRASSELLI et al.** Electron-beam induced RAFT-graft polymerization of poly(acrylic acid) onto PVDF. *Nucl. Instr. and Meth. in Phys. Res. B,* 2005, vol. 236, 201-207
- **BESSBOUSSE, H ; ; NANDHAKUMAR, I ; DECKER, M. ; BARSBAY, M. ; CUSCITO, O. ; LAIREZ, D. ; CLOCHARD, M.-C. ; WADE, T. L.** Functionalized nanoporous track-etched β-PVDF membrane electrodes for lead(II) determination by square wave anodic stripping voltammetry. *Analytical Methods,* June 2011, vol. 3, 135
- **BARSBAY, M. ; GÜVEN, O. ; STENZEL, M.H. ; DAVIS, T.P. ; BARNER-KOWOLLIK, C. ; BARNER, L.** Verification of Controlled Grafting of Styrene from Cellulose via Radiation-Induced RAFT Polymerization. *Macromolecules,* 2007, vol. 40, 7140-7147
- **HALIMA ALEM et al.** Microstructure and thermo-responsive behaviour of poly(N-isopropylacrylamide) brushes grafted in nanopores of track-etched membranes. *Journal of membrane science,* 19 December 2007, vol. 308 (1-2), 75-86
- **ALEXANDER FRIEBE et al.** Controlled pore functionalization of Poly(ethylene terephthalate) track-etched membranes via surface-initiated atom transfer radical polymerization. *Langmuir,* 01 September 2007, vol. 23 (20), 10316-10322
- **HAAD BESSBOUSSE et al.** Functionalized nanoporous track-etched [beta]-PVDF membrane electrodes for lead determination by square wave anodic stripping voltammetry. *Analytical Methods,* 01 January 2011, vol. 3 (6), 1351